# FASCICULE DE BREVET EUROPEEN

(11) **EP 2 565 689 B1**
(45) Date de publication et mention de la délivrance du brevet: **30.08.2017**
(21) Numéro de dépôt: 12177701.5
(22) Date de dépôt: 24.07.2012
(51) Int. Cl.: G02B 6/00, B60Q 1/28, F21W 101/10, F21V 8/00

(54) **Guide de lumière pour unité optique**
Lichtwellenleiter für optische Einheit
Light guide for optical unit

(30) Priorité: 29.08.2011 FR 1157585
(43) Date de publication de la demande: 06.03.2013
(73) Titulaire: VALEO VISION, 93012 Bobigny Cedex (FR)
(72) Inventeur: Dubosc, Christophe, 93250 VILLEMOMBLE (FR)

(56) Documents cités:
- DE-A1-102005 029 363
- FR-A1- 2 904 680
- US-A1- 2009 010 021

## Description

La présente invention porte sur un guide de lumière. Elle porte plus particulièrement sur un guide de lumière configuré pour être intégré dans une unité optique apte à réaliser une fonction de signalisation ou une fonction d'éclairage ou une fonction d'éclairage intérieur pour véhicule automobile.

On entend notamment par éclairage intérieur l'éclairage de l'intérieur d'un habitacle d'un véhicule automobile.

L'invention reçoit pour application particulièrement avantageuse les unités optiques réalisant une fonction de feux de position, de feux de jour habituellement désignée par l'acronyme DRL pour Daytime Running Light ou une fonction d'indicateur de direction.

La recherche d'une sécurité de conduite constamment renforcée amène notamment à améliorer les fonctions de signalisation et d'éclairage des véhicules. Ainsi, des solutions ont été proposées pour rendre plus facilement visible un véhicule se déplaçant de nuit ou de jour. Ces solutions connues prévoient par exemple une combinaison de plusieurs diodes électroluminescentes (LED) formant un motif particulièrement visible. Certains de ces motifs sont spécifiques d'une marque de véhicules et constituent une véritable signature lumineuse. Ces motifs assurent donc, outre leur fonction optique de signalisation, une fonction de personnalisation du véhicule. Cette dernière fonction répond à un besoin croissant de la part des consommateurs, besoin consistant à avoir un véhicule personnalisé et facilement reconnaissable.

Les solutions de l'art antérieur ne permettent cependant pas de créer un grand nombre de motifs visuels à la fois très visibles, facilement identifiables et relativement différents les uns des autres.

La présente invention vise à apporter une solution aux limitations de l'art antérieur.

A cet effet, on prévoit selon l'invention un guide de lumière configuré pour être intégré dans une unité optique apte à réaliser une fonction de signalisation ou une fonction d'éclairage ou une fonction d'éclairage intérieur pour véhicule automobile, le guide comprenant une pluralité de branches à l'intérieur desquelles la lumière est guidée au moins en partie, le guide comprenant au moins une intersection formée par au moins quatre branches.

Ainsi, le guide permet de diffuser de la lumière pour former un motif lumineux qui peut présenter des formes très variées en étant très visibles et aisément reconnaissables.

De manière facultative, le dispositif selon l'invention peut en outre présenter au moins l'une quelconque des caractéristiques optionnelles suivantes :
Une branche comprend deux extrémités. Une extrémité peut être soit une entrée, soit une intersection, soit une sortie, soit une extrémité du guide. Ainsi, une branche est souvent définie comme une portion de guide située entre deux intersections ou entre une entrée et une intersection ou entre une intersection et une sortie ou entre une entrée et une sortie. La branche ne comprend ainsi pas de dérivation.
L'intersection est définie par au moins deux branches amont disposées en amont de l'intersection et par au moins deux branches aval disposées en aval de l'intersection, l'amont et l'aval étant définis par rapport au sens de propagation de la lumière dans le guide.

Le guide comprend une pluralité d'intersections formées d'au moins quatre branches.

De manière particulièrement avantageuse, les branches et les intersections présentent chacune une enveloppe externe et le guide est conformé de sorte qu'au moins 70% de la lumière entrant dans le guide s'échappe par les enveloppes externes des branches et/ou des intersections. Plus précisément, chaque branche présente deux extrémités séparées par une portion longitudinale et une partie significative de la lumière entrant dans le guide s'échappe par l'enveloppe externe de la portion longitudinale. De préférence, une partie également significative de la lumière entrant dans le guide s'échappe par l'enveloppe externe de l'intersection.

De préférence également, le guide est conformé de sorte que la totalité de la lumière entrant dans le guide s'échappe par les enveloppes externes des branches et des intersections.

Avantageusement, le guide présente une enveloppe externe et agencé de manière à ce qu'au moins 80% de son enveloppe externe diffuse de la lumière. Ainsi, au moins 80% de la surface visible depuis l'extérieur est éclairée de manière directe. De préférence, la lumière est diffusée hors du guide sur l'ensemble de la surface de ce dernier. Le guide ne comprend donc pas de portion par laquelle la lumière ne s'échappe pas.

De préférence, au moins au niveau des branches et des intersections, la lumière s'échappe hors du guide par diffusion.

De préférence également, le guide comprend sur son enveloppe externe ou interne des moyens de diffusion de la lumière. De manière préférée, les moyens de diffusion de la lumière sont des foyers de diffusion réalisés dans la surface du guide par prélèvement de matière. Par exemple on effectue par laser des impacts sur la surface interne du guide pour former des microprismes.

De manière particulièrement avantageuse, au moins deux branches amont d'une intersection forment entre elles un angle inférieur à 60 degrés et de préférence inférieur à 40 degrés.

De manière préférée, le guide comprend une pluralité d'intersections.

Préférentiellement, la pluralité d'intersections et de branches forme un maillage.

Avantageusement, le guide comprend au moins une pièce monolithique comprenant plusieurs branches.

De manière particulièrement avantageuse, le guide est formé d'une seule pièce monolithique.

Avantageusement, toutes les branches sont contenues dans un plan. Elles sont donc toutes en deux dimensions. Elles peuvent être courbes ou rectilignes. Leur combinaison peut permettre de former un guide en deux dimensions ou en trois dimensions. Pour ce deuxième mode de réalisation, les intersections sont conformées de sorte que les différentes branches ne soient pas toutes dans le même plan.

Selon une alternative particulièrement avantageuse, au moins une branche est en trois dimensions. La branche n'est ainsi pas contenue dans un plan. Ce type de guide présente pour avantage d'être plus visible et plus aisément reconnaissable. De manière préférée, toutes les branches du guide sont en trois dimensions.

De manière préférée, toutes les branches du guide comportent au moins une intersection.

De manière préférée, au moins certaines des branches présentent au moins une courbure, les rayons de courbure étant supérieurs à 150 millimètres (mm) pour une section de guide inférieure à 200 mm².

De manière préférée, la section des branches est comprise entre 100mm² et 250mm². Cette section permet un bon guidage de la lumière ainsi qu'une bonne visibilité des branches à travers lesquelles la lumière est diffusée.

Un autre aspect de l'invention concerne une unité optique apte à réaliser une fonction de signalisation ou une fonction d'éclairage ou une fonction d'éclairage intérieur pour véhicule automobile, comprenant un guide selon l'une quelconque des caractéristiques précédentes et comprenant au moins une source de lumière.

De manière préférée et facultative, la source de lumière est une diode électroluminescente (LED).

De manière également préférée et facultative, le guide comprend au moins une entrée définie par une face d'entrée, la source de lumière présente une direction principale d'émission et est placée au regard de la face d'entrée de sorte que sa direction principale d'émission soit sensiblement perpendiculaire à la face d'entrée, la face d'entrée étant sensiblement perpendiculaire à la direction d'observation d'un observateur du guide en utilisation. Typiquement, pour un guide optique réalisant une fonction d'éclairage de jour (DRL), la direction d'observation est une direction horizontale, sensiblement longitudinale au véhicule. Ainsi, les observateurs, piétons situés face au véhicule ou les automobilistes arrivant en sens inverse, ont une très bonne visibilité du guide.

Selon une option avantageuse, l'unité optique comprend un prisme distinct des branches et coopérant avec au moins l'une des branches de sorte à recevoir au moins une partie de la lumière guidée par le guide. Des prismes peuvent être disposés sur toutes surface du guide. Ils sont préférentiellement positionnés en sortie pour participer à la fonction de signalisation ad hoc.

De manière préférée, l'unité optique assure une fonction de feux de jour ou feux de position de nuit, ou une fonction de clignotant.

Selon un mode de réalisation particulier, l'unité optique assure une fonction d'éclairage additionnelle à celle assurée par le guide. Par exemple, des moyens permettant d'assurer une fonction d'éclairage ou de signalisation sont disposés à l'arrière du guide ou entre les branches, sans en altérer la fonctionnalité. Par exemple un clignotant derrière, un feu de jour ou un feu de position peuvent ainsi être incorporés avec le guide au sein d'une même unité optique.

Un autre aspect de la présente invention concerne un projecteur pour véhicule automobile comprenant une unité optique selon l'une quelconque des caractéristiques précédentes et dans lequel le guide est visible depuis l'extérieur du projecteur.

Selon un autre aspect, la présente invention porte sur un véhicule automobile comprenant un projecteur selon la caractéristique précédente et dans lequel le guide est visible depuis l'extérieur du véhicule.

D'autres caractéristiques, buts et avantages de la présente apparaîtront à la lecture de la description détaillée qui va suivre et au regard des dessins annexés donnés à titre d'exemples non limitatifs sur lesquels :
La figure 1 est une vue en perspective d'un guide selon un exemple de réalisation de l'invention. Dans cet exemple, le guide comprend trois entrées et six sorties.
La figure 2 est une vue en perspective d'un guide selon un autre exemple de réalisation de l'invention. Dans cet exemple, le guide comprend deux entrées et présente une extrémité où se rejoignent plusieurs branches.
Les figures 3 et 4 sont d'autres vues en perspective du guide illustré en figure 2.
La figure 5 est une vue en perspective d'une unité optique intégrant un guide selon encore un autre exemple de réalisation de l'invention.
Les figures 6 et 7 sont des vues respectivement en perspective et du dessus selon encore un autre exemple de réalisation de l'invention.

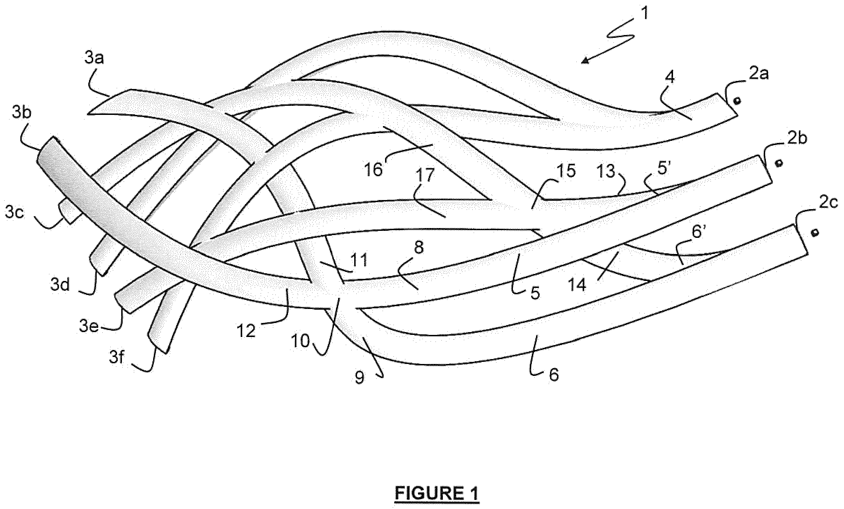

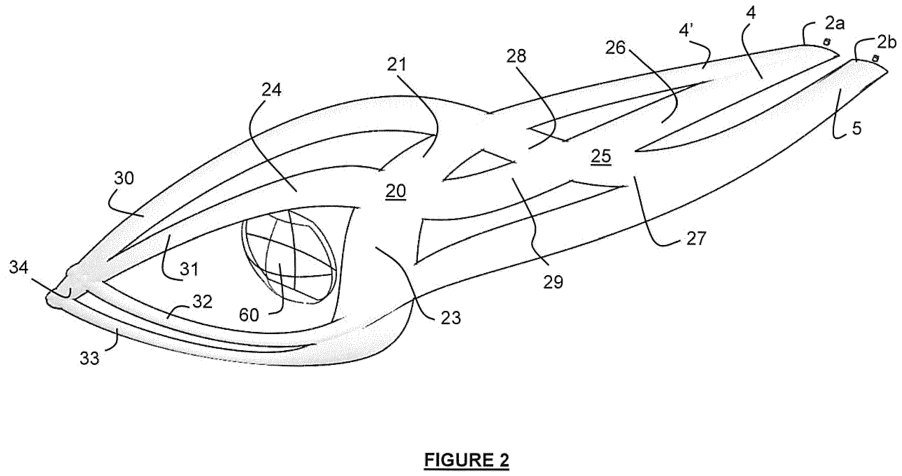

Un dispositif selon l'invention va maintenant être décrit en référence à la figure 1. Puis des variantes seront décrites en référence aux figures 2 à 7.

Le guide 1 de lumière présente au moins une entrée par laquelle de la lumière est destinée à pénétrer. Typiquement, cette entrée est associée à au moins une source de lumière. Avantageusement, cette source de lumière est une diode électroluminescente généralement désignée par l'acronyme de son vocable anglais LED.

Sur l'exemple illustré, le guide comprend trois entrées référencées 2a, 2b, 2c. A partir de chaque entrée s'étend au moins une branche. Sur l'exemple illustré, la branche 4 s'étend depuis l'entrée 2a. Les branches 5 et 5' s'étendent depuis l'entrée 2b. Les branches 6 et 6' s'étendent depuis l'entrée 2c.

Dans la présente invention, on définit par branche une portion du guide sensiblement cylindrique, de façon préférée et non limitative de section essentiellement circulaire, apte à guider la lumière et présentant deux extrémités. Une extrémité peut être une entrée ou une sortie du guide ou une extrémité du guide ou un dispositif tel qu'un prisme associé au guide ou peut former en partie une intersection de plusieurs branches.

De manière avantageuse, le guide comprend au moins une intersection entre au moins quatre branches. Sur le guide de la figure 1, certaines des intersections définies par au moins quatre branches sont référencées 10 et 15. Par exemple, l'intersection 10 est formée par les branches 5, 6, 11, 12.

Dans la présente demande de brevet, l'amont et l'aval sont définis par rapport au sens de propagation de la lumière depuis une source placée à proximité d'une entrée du guide.

De manière avantageuse, au moins deux branches amont débouchent sur une intersection et au moins deux branches aval s'étendent à partir de cette intersection. Ainsi, sur l'exemple illustré, la branche 5 présente une extrémité aval 8 définissant une partie de l'intersection 10. La branche 6 présente une extrémité aval 9 définissant également en partie l'intersection 10. Les extrémités amont des branches aval 11 et 12 définissent également en partie l'intersection 10. Il en est de même pour l'intersection 15 formée en partie par les extrémités aval 13 et 14 des branches amont 5' et 6' et par les branches aval 16, 17 s'étendant depuis cette extrémité 15.

Avantageusement, le guide comprend une pluralité d'intersections et de branches formant un maillage. Comme illustré dans cet exemple non limitatif de la figure 1, le maillage obtenu est en trois dimensions. Cela renforce la visibilité du guide 1 et permet d'accroître très significativement la variété des motifs qui peuvent être réalisés.

Les branches d'entrée 4, 5, 5', 6, 6' s'entremêlent, se chevauchent, forment des ramifications ou au contraire fusionnent entre elles. Le guide obtenu présente visuellement une structure organique ou biologique.

De manière particulièrement avantageuse, l'enveloppe du guide 1 est en partie au moins diffusante. Ainsi, une partie au moins de la lumière qui pénètre dans le guide par la ou les entrées s'en échappe à travers la surface externe des branches et/ou des intersections.

Préférentiellement, la partie de lumière qui est diffusée à travers l'enveloppe du guide est supérieure à 70% à la lumière qui pénètre à l'intérieur du guide.

La partie restante de lumière peut être transmise à travers les sorties 3a à 3f. De manière additionnelle, une partie de la lumière non diffusée à travers l'enveloppe du guide 1 peut être transmise à un dispositif optique tel qu'un prisme.

De manière avantageuse, la forme du guide est également agencée de sorte à contourner ou envelopper d'autres éléments constituants l'unité optique. Par exemple, comme représenté sur les figures, 2 3, 4 et 5, l'unité optique, typiquement un projecteur intègre une lentille 60. Cette lentille 60 n'intervient pas dans le système optique du guide. Ces figures illustrent clairement que le guide maillé est apte à envelopper ou contourner la lentille présente dans le projecteur.

De manière préférée, l'ensemble de la lumière ou au moins 90% de la lumière entrant dans le guide est diffusé à travers la surface des branches et des intersections.

Selon une option avantageuse permettant de renforcer la visibilité du motif créé, l'ensemble du guide diffuse de la lumière. Plus précisément, toute la surface ou au moins 80% de l'enveloppe du guide est diffusante. Ainsi le guide ne présente pas de branches, intersections, portions de branches ou portions d'intersections qui ne diffusent pas de la lumière vers l'extérieur du guide. Ainsi, vue depuis l'extérieur, toute la surface visible par un observateur est éclairée.

Selon une option avantageuse, seules les parois du guide qui sont visibles depuis l'extérieur de l'unité optique (projecteur par exemple) dans laquelle le guide est incorporé, sont diffusantes. Le guide ne diffuse ainsi que selon les directions qui sont effectivement visibles en utilisation. Pour un même flux lumineux entrant, la visibilité du guide sera donc plus forte

On peut par exemple déposer sur une partie de la surface des branches un revêtement diffusant. Par exemple, ce revêtement peut être déposé sur l'ensemble de la surface disposée au regard du guide, sur le fond de l'unité optique constituée par exemple par un boîtier de projecteur.

De manière préférée, le guide est agencé de manière que la diffusion de la lumière à sa surface soit sensiblement homogène. Ainsi un observateur ne percevra pas de portions de surface qui diffusent significativement plus de lumière que d'autres portions.

Afin de faciliter la diffusion de lumière, on prévoit que le guide, au moins sur sa surface interne, présente des moyens de diffusion de la lumière. Ces moyens peuvent être un état de surface diffusif. Ces moyens peuvent également être des micro-creux, par exemple créés par laser, formant des micro-prismes diffusifs. Typiquement, la taille d'un creux est de l'ordre de 0.5mm de diamètre

Afin de faciliter une répartition homogène de la lumière sur l'ensemble de la surface externe et visible du guide, et afin d'éviter que certaines branches, particulièrement les branches disposées le plus en aval, ne reçoivent que peu ou pas de lumière, on prévoit que les branches amont des intersections forment entre elles des angles inférieurs à 60°. Ainsi, sur l'exemple illustré en figure 1, les branches 5 et 6, au niveau de leurs extrémités aval 8 et 9, forment un angle inférieur à 60°. De préférence, cet angle est inférieur à 40°. De même, les branches 5' et 6', au niveau de leurs extrémités aval 13 et 14, forment un angle inférieur à 60° et de préférence à 40°.

Les branches du guide peuvent être en deux ou trois dimensions. De préférence, elles sont en trois dimensions pour contribuer à rendre fortement visible et identifiable le motif lumineux généré par les parois diffusantes du guide.

De manière additionnelle ou alternative, afin de favoriser la diffusion de la lumière dans tout le guide lorsque les branches sont courbes, on fait en sorte que le rayon de courbure soit inférieur à 150mm.

De manière également additionnelle ou alternative, la section des branches est comprise entre 50mm² et 400mm² et de préférence entre 100 et 250mm².

Au niveau de chacune de ces entrées, le guide présente une face d'entrée destinée à être disposée au regard de la source de lumière. De préférence, la face d'entrée est sensiblement perpendiculaire à la direction d'observation d'un observateur du guide lors de l'utilisation de ce dernier. Typiquement, pour un guide optique réalisant une fonction d'éclairage de jour, la direction d'observation est une direction horizontale sensiblement longitudinale à l'avancée du véhicule. Ainsi les observateurs, qu'ils soient piétons ou véhicules arrivant en sens inverse, ont une très bonne visibilité du guide. De préférence, la source de lumière présente une direction principale d'émission de lumière. Cette direction principale est sensiblement perpendiculaire à la face d'entrée du guide. Ces caractéristiques permettent de renforcer l'éclairage et le rendement du guide.

De préférence, le guide comprend une pièce monolithique comportant toutes les branches et les intersections. Cela permet de faciliter l'assemblage de l'unité optique à l'intérieur de laquelle le guide est incorporé. En outre, la robustesse de ce dernier est renforcée, ce qui s'avère avantageux lorsque l'unité optique est intégrée dans un véhicule. Par ailleurs, on supprime les problèmes de transmission de lumière entre branches appartenant à deux pièces distinctes.

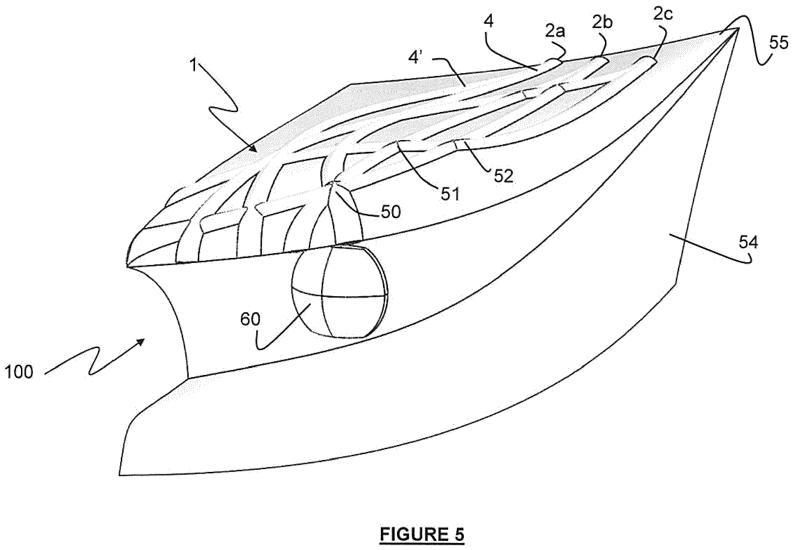

Sur les exemples illustrés en figures 1 et 5, les guides sont formés d'une pièce monolithique.

A titre d'exemple non limitatif, on peut fabriquer un guide selon l'invention par moulage. Plus précisément et notamment pour la formation de guides en trois dimensions et présentant éventuellement un maillage, on pourra utiliser un procédé de surmoulage d'une même matière transparente.

Pour la réalisation du guide, on pourra choisir un matériau tel que le PMMA (polyméthacrylate de méthyle) ou le Polycarbonate à haute transmission de lumière. Ce type de matériau assure un bon guidage de la lumière tout en permettant de renforcer sa diffusivité au niveau de parois externes par un travail de son état de surface. En outre, la réalisation de formes complexes, par exemple en trois dimensions et/ou permettant un maillage, est relativement aisée.

Dans l'exemple illustré en figure 2, le guide comprend deux entrées 2a, 2b. L'entrée 2a donne naissance à deux branches 4, 4'. L'entrée 2b donne naissance à la branche 5. Les branches 4 et 5 se rencontrent au niveau de leurs extrémités aval 26, 27 et forment en partie l'intersection 25. L'intersection 25 se prolonge par les branches aval 28 et 29. La branche 29 et une branche 21 se rencontrent pour former l'intersection 20 en partie, intersection 20 de laquelle partent les branches aval 23 et 24. Les branches 30, 31, 32, 33 se rejoignent pour former une extrémité 34 du guide. De préférence, toute la surface interne du guide est diffusante. L'extrémité 34 transmet significativement plus de lumière par unité de surface que les autres portions de surface du guide afin d'assurer les valeurs photométriques exigées par la réglementation

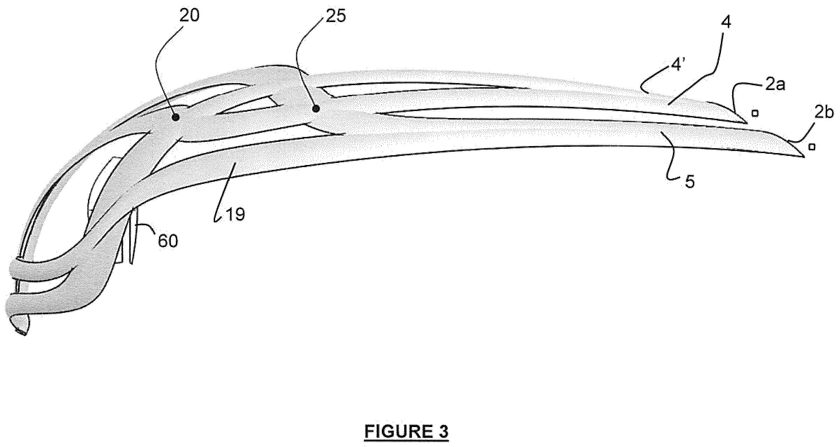

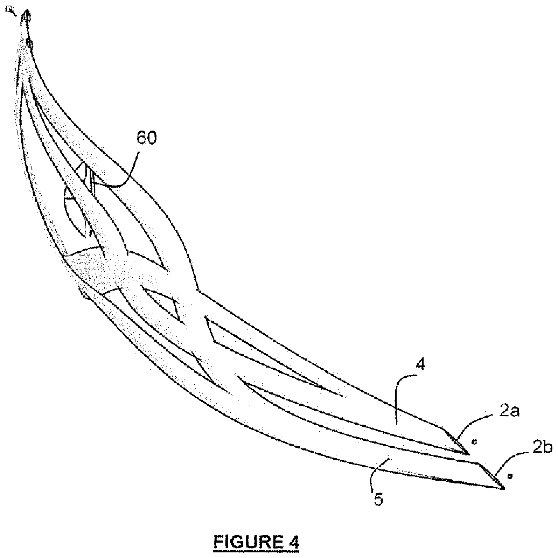

Les figures 3 et 4 sont d'autres vues du guide illustrées en figure 2. Ces figures font apparaître la forte courbure du guide. Cela lui donne un aspect visuel très spécifique proche d'une forme biologique. Il ressort clairement de ce mode de réalisation que certaines au moins des branches du guide peuvent être en trois dimensions. La branche référencée 19 est par exemple en trois dimensions. De préférence, toutes les branches du guide sont en trois dimensions. Il en est ainsi pour les guides illustrés aux figures 1 à 5 par exemple.

La figure 5 présente une unité optique selon l'invention vu selon un quart de face avant d'un véhicule automobile. Une portion de pare-choc 54 est également représentée.

En outre, un guide 1 selon l'invention est intégré dans l'unité optique 100. Ce guide présente trois entrées 2a, 2b, 2c. Il comprend également des intersections 51 et 52 formées de quatre branches chacune, deux amont et deux aval.

Un guide selon l'invention n'étant pas limité par des intersections à quatre branches uniquement, un tel guide peut comprendre des intersections formées par 6 branches. Un guide à six branches comprend par exemple 3 branches amont et 3 branches aval. Une telle intersection est référencée 50. Il convient de noter que le nombre de branches en amont d'une intersection n'est pas nécessairement égal au nombre de branches en aval de cette intersection.

Ce guide 1 est sensiblement plan. Il repose sur un support 55. On peut prévoir de ne pas laisser de lumière s'échapper par les parois du guide au regard du support 55 afin d'améliorer la visibilité du guide 1 perçu par un observateur extérieur.

L'avant du guide 1 destiné à être rendu aisément visible est courbé vers l'avant pour donner au guide 1 une forme en trois dimensions.

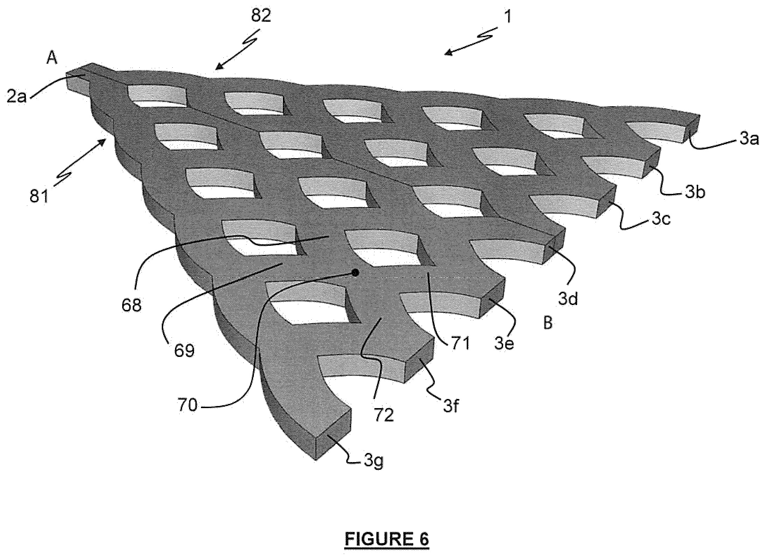

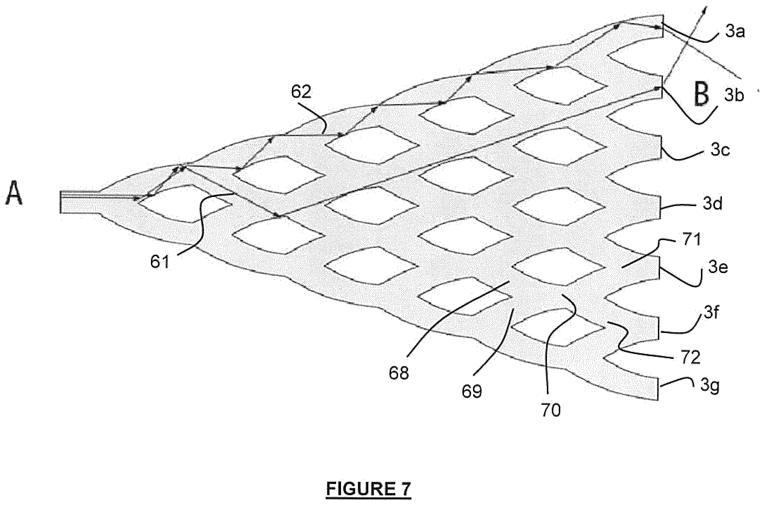

Le guide illustré en figures 6 et 7 est sensiblement plan. Il comprend une entrée 2a destinée à être associée à une source de lumière non illustrée. Il comprend une pluralité d'intersections telle que celle référencée 70. Cette intersection 70 est formée par les branches amont 68, 69 et par les branches aval 71, 72. La figure 7 illustre deux exemples de trajets lumineux 61, 62. Il apparaît ainsi clairement qu'à partir de l'entrée 2a, toutes les sorties 3a à 3f peuvent être atteintes par le flux lumineux.

Il ressort clairement de la description ci-dessus que l'invention propose une solution permettant d'améliorer la visibilité du véhicule intégrant un guide selon l'invention et que ce guide peut être obtenu aisément tout en permettant de former des motifs très visibles, de formes variées et possiblement très complexes.

De manière avantageuse, un guide selon l'invention est intégré dans une unité optique telle qu'un projecteur réalisant une fonction d'éclairage ou de signalisation comme par exemple une fonction d'indication de direction, une fonction de feux de position ou une fonction de feux de jour.

L'invention n'est pas limitée aux modes de réalisation décrits mais s'étend à tout mode de réalisation conforme à son esprit.

## Revendications

1. Guide (1) de lumière configuré pour être intégré dans une unité optique apte à réaliser une fonction de signalisation ou une fonction d'éclairage ou une fonction d'éclairage intérieur pour véhicule automobile, le guide (1) comprenant une pluralité de branches à l'intérieur desquelles la lumière est guidée au moins en partie, **caractérisé en ce que** le guide (1) comprend au moins une intersection (10, 15) formée par au moins quatre branches (4, 5, 11, 12, 4', 5', 16, 17), le guide comprenant une pluralité d'intersections et de branches formant un maillage.

2. Guide (1) selon la revendication précédente dans lequel l'intersection (10, 11) est définie par au moins deux branches amont (4, 5, 4', 5') disposées en amont de l'intersection (10, 15) et par au moins deux branches aval (11, 12, 16, 17) disposées en aval de l'intersection (10, 15), l'amont et l'aval étant définis par rapport au sens de propagation de la lumière dans le guide (1).

3. Guide (1) selon l'une quelconque des revendications précédentes dans lequel les branches et les intersections présentent chacune une enveloppe externe et le guide (1) est conformé de sorte qu'au moins 70% de la lumière entrant dans le guide (1) s'échappe par les enveloppes externes des branches et/ou des intersections.

4. Guide (1) selon la revendication précédente conformé de sorte que la totalité de la lumière entrant dans le guide (1) s'échappe par les enveloppes externes des branches et/ou de l'au moins une intersection.

5. Guide (1) selon l'une quelconque des revendications précédentes présentant une enveloppe externe et agencé de manière à ce qu'au moins 80% de son enveloppe externe diffuse de la lumière.

6. Guide (1) selon l'une quelconque des revendications précédentes dans lequel au moins deux branches amont (4, 5) d'une intersection (10) forment entre elles un angle inférieur à 60 degrés.

7. Guide (1) selon l'une quelconque des revendications précédentes comprenant au moins une pièce monolithique (81, 82) comprenant plusieurs branches.

8. Guide (1) selon l'une quelconque des revendications précédentes présentant une structure en deux dimensions ou en trois dimensions.

9. Guide (1) selon l'une quelconque des revendications précédentes dans lequel toutes les branches sont contenues dans un plan, au moins certaines des branches étant courbes.

10. Guide (1) selon l'une quelconque des revendications précédentes dans lequel la section des branches est comprise entre 100mm² et 250mm².

11. Unité optique apte à réaliser une fonction de signalisation ou une fonction d'éclairage ou une fonction d'éclairage intérieur pour véhicule automobile, comprenant un guide (1) selon l'une quelconque des revendications précédentes et comprenant au moins une source de lumière.

12. Unité optique selon la revendication précédente dans lequel la source de lumière est une diode électroluminescente (LED).

13. Unité optique selon l'une quelconque des deux revendications précédentes configurée pour assurer une fonction de feux de jour, ou une fonction de feux de position de nuit ou une fonction d'indicateur de direction.

14. Projecteur pour véhicule automobile comprenant une unité optique selon l'une quelconque des revendications 11 à 13 et dans lequel le guide (1) présente une enveloppe externe qui est apte à diffuser de la lumière et qui est visible depuis l'extérieur du projecteur.

## Patentansprüche

1. Lichtleiter (1), der konfiguriert ist, in eine optische Einheit integriert zu werden, die eine Signalfunktion oder eine Beleuchtungsfunktion oder eine Innenbeleuchtungsfunktion für ein Kraftfahrzeug ausführen kann, wobei der Leiter (1) eine Vielzahl von Zweigen enthält, in deren Innerem das Licht zumindest zum Teil geleitet wird, **dadurch gekennzeichnet, dass** der Leiter (1) mindestens eine von mindestens vier Zweigen (4, 5, 11, 12, 4', 5', 16, 17) gebildete Kreuzung (10, 15) enthält, wobei der Leiter eine Vielzahl von Kreuzungen und Zweigen enthält, die ein Maschengitter bilden.

2. Leiter (1) nach dem vorhergehenden Anspruch, wobei die Kreuzung (10, 11) von mindestens zwei stromaufwärtigen Zweigen (4, 5, 4', 5'), die stromaufwärts vor der Kreuzung (10, 15) angeordnet sind, und von mindestens zwei stromabwärtigen Zweigen (11, 12, 16, 17) definiert wird, die stromabwärts hinter der Kreuzung (10, 15) angeordnet sind, wobei stromaufwärts und stromabwärts bezüglich der Ausbreitungsrichtung des Lichts im Leiter (1) definiert werden.

3. Leiter (1) nach einem der vorhergehenden Ansprüche, wobei die Zweige und die Kreuzungen je eine Außenhülle aufweisen und der Leiter (1) so gestaltet ist, dass mindestens 70% des in den Leiter (1) eintretenden Lichts durch die Außenhüllen der Zweige und/oder der Kreuzungen austritt.

4. Leiter (1) nach dem vorhergehenden Anspruch, der so gestaltet ist, dass die Gesamtheit des in den Leiter (1) eintretenden Lichts durch die Außenhüllen der Zweige und/oder der mindestens einen Kreuzung austritt.

5. Leiter (1) nach einem der vorhergehenden Ansprüche, der eine Außenhülle aufweist und so eingerichtet ist, dass mindestens 80% seiner Außenhülle Licht streut.

6. Leiter (1) nach einem der vorhergehenden Ansprüche, wobei mindestens zwei stromaufwärtige Zweige (4, 5) einer Kreuzung (10) zwischen sich einen Winkel von weniger als 60 Grad bilden.

7. Leiter (1) nach einem der vorhergehenden Ansprüche, der mindestens ein monolithisches Bauteil (81, 82) enthält, das mehrere Zweige enthält.

8. Leiter (1) nach einem der vorhergehenden Ansprüche, der eine zwei- oder dreidimensionale Struktur aufweist.

9. Leiter (1) nach einem der vorhergehenden Ansprüche, wobei alle Zweige in einer Ebene enthalten sind, wobei mindestens bestimmte der Zweige gekrümmt sind.

10. Leiter (1) nach einem der vorhergehenden Ansprüche, wobei der Querschnitt der Zweige zwischen 100 mm² und 250 mm² liegt.

11. Optische Einheit, die eine Signal- oder eine Beleuchtungsfunktion oder eine Innenbeleuchtungsfunktion für ein Kraftfahrzeug ausführen kann, die einen Leiter (1) nach einem der vorhergehenden Ansprüche enthält und mindestens eine Lichtquelle enthält.

12. Optische Einheit nach dem vorhergehenden Anspruch, wobei die Lichtquelle eine Elektrolumineszenzdiode (LED) ist.

13. Optische Einheit nach einem der zwei vorhergehenden Ansprüche, die konfiguriert ist, eine Tagesabblendlichtfunktion oder eine Nachtstandlichtfunktion oder eine Richtungsanzeigerfunktion zu gewährleisten.

14. Scheinwerfer für ein Kraftfahrzeug, der eine optische Einheit nach einem der Ansprüche 11 bis 13 enthält und wobei der Leiter (1) eine Außenhülle aufweist, die Licht streuen kann und die von außerhalb des Scheinwerfers sichtbar ist.

## Claims

1. Light guide (1) configured to be incorporated in an optical unit capable of producing a signalling function or a lighting function or an interior lighting function for a motor vehicle, the guide (1) comprising a plurality of branches inside which the light is guided at least partly, **characterized in that** the guide (1) comprises at least one intersection (10, 15) formed by at least four branches (4, 5, 11, 12, 4', 5', 16, 17), the guide comprising a plurality of intersections and branches forming a mesh.

2. Guide (1) according to the preceding claim, in which the intersection (10, 11) is defined by at least two upstream branches (4, 5, 4', 5') arranged upstream of the intersection (10, 15) and by at least two downstream branches (11, 12, 16, 17) arranged downstream of the intersection (10, 15), upstream and downstream being defined in relation to the direction of propagation of the light in the guide (1).

3. Guide (1) according to either one of the preceding claims, in which the branches and the intersections each have an outer jacket and the guide (1) is conformed such that at least 70% of the light entering into the guide (1) escapes through the outer jackets of the branches and/or of the intersections.

4. Guide (1) according to the preceding claim, conformed such that all of the light entering into the guide (1) escapes through the outer jackets of the branches and/or of the at least one intersection.

5. Guide (1) according to any one of the preceding claims, having an outer jacket and arranged so that at least 80% of its outer jacket diffuses light.

6. Guide (1) according to any one of the preceding claims, in which at least two upstream branches (4, 5) of an intersection (10) form between them an angle of less than 60 degrees.

7. Guide (1) according to any one of the preceding claims, comprising at least one monolithic part (81, 82) comprising several branches.

8. Guide (1) according to any one of the preceding claims, having a structure in two dimensions or in three dimensions.

9. Guide (1) according to any one of the preceding claims, in which all the branches are contained in a plane, at least some of the branches being curved.

10. Guide (1) according to any one of the preceding claims, in which the section of the branches is between 100 mm² and 250 mm².

11. Optical unit capable of producing a signalling function or a lighting function or an interior lighting function for a motor vehicle, comprising a guide (1) according to any one of the preceding claims and comprising at least one light source.

12. Optical unit according to the preceding claim, in which the light source is a light-emitting diode (LED).

13. Optical unit according to either one of the two preceding claims, configured to ensure a daytime running light function, or a nighttime position light function or a direction indicator function.

14. Headlight for a motor vehicle comprising an optical unit according to any one of Claims 11 to 13 and in which the guide (1) has an outer jacket which is capable of diffusing light and which is visible from outside the headlight.
